(19)

Europäisches
Patentamt
European
Patent Office
Office européen
des brevets

(11)  **EP 2 698 221 A1**

(12)  **EUROPEAN PATENT APPLICATION**

(43) Date of publication:
**19.02.2014 Bulletin 2014/08**

(51) Int Cl.:
***B23D 61/10*** *(2006.01)*

(21) Application number: **12005839.1**

(22) Date of filing: **12.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Meyer Burger AG
3645 GWATT (Thun) (CH)**

(72) Inventors:
• **Zeiter, Olivier
3951 Agarn/VS (CH)**
• **RAFAEL, Helge
3604 Thun (CH)**

(74) Representative: **Patentbüro Paul Rosenich AG
BGZ
LI-9497 Triesenberg (LI)**

(54)  **Thrust element and inner diameter saw for ingots with such a thrust element**

(57)     A thrust element (1), preferably thrust ring, for a tensioning system for an inner diameter ingot saw, is intended to be biased onto the saw blade (2) by at least one adjustable tensioning element (6). The radial cross section of the surface of the thrust element (1) facing the saw blade (2) is formed as convex curve (1a) with an essentially circular center segment (1b) abutting the saw blade (2). The radius (R) of the center segment (1b) is 8 to 12 mm. Said thrust element (1) is used preferably in an inner diameter ingot saw with a supporting ring (3) and a tensioning system for the saw blade (2).

**FIG 3**

EP 2 698 221 A1

**Description**

The invention relates to a thrust element, preferably thrust ring, for a tensioning system for an inner diameter saw, according to the preamble of claim 1, and an inner diameter saw with a supporting ring and a tensioning system for the saw blade - especially for cutting ingots, according to the preamble of claim 7.

Inner diameter saws, also known as annular saws, are typically used for cropping (cutting off head and tail) hard or brittle materials such as mono- or poly- crystalline ingots and bricking (cutting the cropped mono- or poly crystalline ingot into short segments or bricks). The ingot is fed into the central opening of a rotating saw blade with its cutting edge around the opening by transportation means.

In order to get a precise cut, the saw blade has to be tensioned and a radial force has to be applied to the saw blade as symmetrically as possible. This force is applied near the outer edge of the saw blade (the inner edge is the cutting edge) and propagates from there to tension the inner diameter of the saw blade, to make the inner edge rounder but also stiffer. The higher the radial tension, the stiffer the inner diameter is, thus making cuts more flat and precise. Moreover, since the inner diameter of the blade has to have a circular shape and typically is - due to production and mounting - not as round as desired, the tensioning is equally used to make the inner diameter more circular.

According to the EP 464 668 A1 tensioning forces are applied to such a thrust ring for acting upon the saw blade by clamping elements releasably connected to the machine rotary part. The center segment of the surface of the thrust ring facing the saw blade shows an essentially circular cross section in radial direction. On both sides of the circular center segment essentially flat surface areas are provided, the planes of which are essentially parallel to the saw blade but which are not intended to contact the saw blade because of their sharp outer edge. Said thrust ring or collar can be held within a recess in a clamping or tensioning ring and presses the saw blade into a recess defining a circular clamping edge.

Typically, thrust rings have a central portion with a radius of about 6mm over an angle of +/- 60° from a line perpendicular to the plane of the saw blade.

Another embodiment of a thrust ring according to the state of the art is provided, on each side of the center segment, with an essentially "flat" or non-curved segment being tangent to the outermost part of the center segment.

The radial tension in the saw blade between two clamping element is showing maximum tension at the position of the maximum thickness of the thrust ring, when using a thrust element and tensioning system of known construction. Where the saw blade leaves the thrust ring, reflexed trailing edges can be seen.

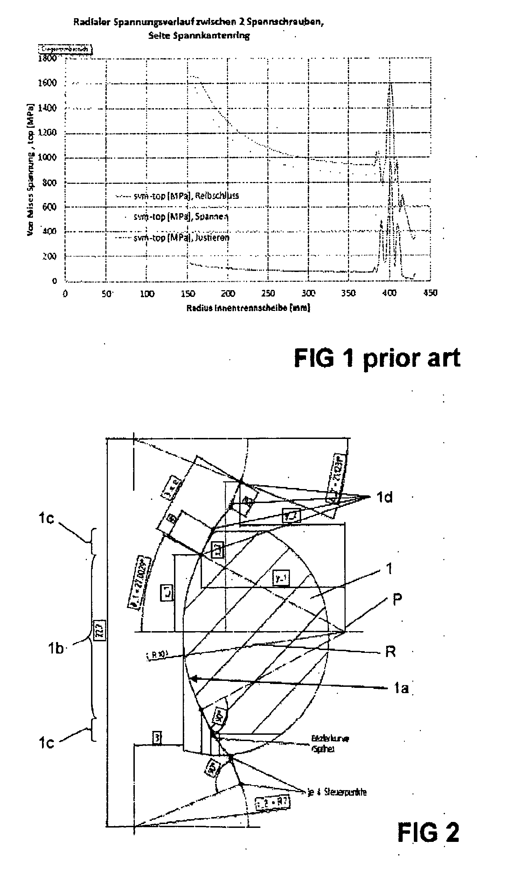

The different curves in the diagram of Fig. 1, showing the tension on a radial path when using a prior art tensioning system, represent three different cases, i.e. holding, when virtually no tension is applied to the thrust ring only holding the saw blade, tensioning, when the saw blade is clamped firmly and adjusting when an adjustment of the inner diameter of the saw blade to a circle is accomplished.

The radial tension applied to the saw blade lies past the yield point with a peak in the area of the thrust ring, because bending is applied to the saw blade.

The object of the present invention is therefore to create a constant tension, in particular bending tension, in the saw blade near the thrust ring.

This is achieved according to the present invention by the features of the independent claim(s). Advantageous further embodiments are disclosed in the drawing figures and in the dependent claims.

According to the present invention, a thrust element, preferably thrust ring, for a tensioning system for an inner diameter ingot saw, intended to be biased or pressed onto the saw blade by at least one adjustable tensioning element, one edge of the radial cross section of the thrust element facing the saw blade being formed as convex curve with an essentially circular center segment abutting the saw blade is characterized in that the radius of the center segment is 8 to 12 mm, preferably 9 to 11 mm, even more preferred about 10 mm. Such, the part of the ring that contacts the saw blade is made wider and the tension is applied to a larger area. Consequently, higher forces can be applied perpendicular to the saw blade without exceeding the maximum tension values of known tensioning systems, resulting in higher radial tensioning forces. Also the deformation of the saw material is reduced, thus preventing it from plastifying and ripping because there are no locations where stresses are concentrated. The thrust element may have rotational symmetry with respect to the center of the saw blade and may be a ring or a segment of such (imaginary) ring, the segment thus also having "partial" rotational symmetry. Radial cross section has to be understood as a plane through the axis of (partial) rotational symmetry, i.e. the cross section with the section plane being perpendicular to the plane of the thrust element or the saw blade, respectively, and being oriented in radial direction.

According to an advantageous embodiment of the invention, the center segment extends over at maximum angles of about 35° each to both sides from a surface perpendicular to the saw blade and bent like the thrust element, the center segment extending preferably over an angle of about 30°, even more preferred over an angle of about 27°. These dimensions are contributing to distribute the tensioning forces over a wider area.

Another advantageous embodiment of the invention is characterized in that at least radially on one side, preferably on both sides of the center segment a segment with convex (arcuate) radial cross section is following. The whole surface facing the saw blade can now be used to apply tensioning forces, without any danger to cause local damage or too high tension forces by sharp edges of the thrust element.

There it is preferred that at least one segment, preferably the radially inner segment, most preferably both adjacent segments, is shaped in form of a Bézier curve.The term "radially inner" is to be understood here and in the following as meaning the side or direction pointing to the center of the saw blade, thrust ring, or the like seen in a radial direction. This preferred embodiment performs far best over any other forms according to the simulations and measurements which were made by the applicant. A Bézier curve is a parametric curve frequently used in computer graphics and related fields to model smooth curves. As the curve is completely contained in the convex hull of its control points, the points can be graphically displayed and used to manipulate the curve intuitively. Affine transformations such as translation, and rotation can be applied on the curve by applying the respective transform on the control points of the curve. Examples can be found in Mathematics for Computer Graphics Applications" by Michael E. Mortenson, the " Encyclopaedia of Mathematics, Supplement I", edited by Michiel Hazewinkel, "Curves and Surfaces for Computer Graphics" by David Salomon, or on

http://nibis.ni.schule.de/~lbs-gym/AnalysisTeil4pdf/Bezierkurven.pdf

In such case it is even more preferred that at least one segment, preferably the radially inner segment, most preferably both adjacent segments, is shaped in form of a third order Bézier curve with four control points. A cubic or third order Bézier curve is defined by four points P0, P1, P2 and P3 in the plane or in higher-dimensional space. The curve starts at P0 going toward P1 and arrives at P3 coming from the direction of P2. Usually, it will not pass through P1 or P2; these points are only there to provide directional information. The distance between P0 and P1 determines "how long" the curve moves into direction P2 before turning towards P3. Writing $B_{Pi,Pj,Pk}(t)$ for the quadratic Bézier curve defined by points Pi, Pj, and Pk, the cubic Bézier curve can be defined as a linear combination of two quadratic Bézier curves:

$$\mathbf{B}(t) = (1 - t)\mathbf{B}_{P_0,P_1,P_2}(t) + t\mathbf{B}_{P_1,P_2,P_3}(t) \,,\ t \in [0, 1].$$

The explicit form of the curve is:

$$\mathbf{B}(t) = (1 - t)^3\mathbf{P}_0 + 3(1 - t)^2t\mathbf{P}_1 + 3(1 - t)t^2\mathbf{P}_2 + t^3\mathbf{P}_3 \,,\ t \in [0, 1].$$

With said particular form it is easily possible to design a curve form with a soft slope.

It is of additional advantage if the transition point of the center segment to the adjacent segments and the tangents of the segments coincide. For the embodiment with the Bézier curve adjacent to the center segment the derivative of the Bézier curve equals preferably that of the radius.

According to the present invention, an inner diameter ingot saw with a supporting ring and a tensioning system for the saw blade, said tensioning system comprises at least a circumferential recess in the supporting ring, the radially inner edge of the recess defining a circular clamping edge, and further comprises at least one thrust element, preferably a thrust ring, with at least one adjustable tensioning element, preferably a tension screw, acting on the at least one thrust element, for adjustably biasing the thrust element and the saw blade into the circumferential recess, is characterized by a thrust element according to any of the preceding paragraphs. With such thrust element, preferably thrust ring, higher radial tensioning forces can be applied without danger of excessive forces action upon the saw blade and hence avoid causing damage. The ingot saw blade can be made stiffer and more even, the inner cutting edge of the ingot saw blade can be made stiffer and rounder, all said effects resulting in more precise cuts.

There, it is of advantage if the surface of at least the radially inner edge is in the radial range where the saw blade leaves the thrust element, of the same shape as the surface of the thrust element. These features guarantee that on both sides of the saw blade sharp edges are omitted and any tensioning forces can be distributed over a large area, without any danger to cause local damage or excessive local force maxima, and thickness is compensated angularly.

Preferably, at least one clamping element, preferably a clamping ring, is mounted to the supporting ring by fastening elements, preferably clamping screws, the outer part of the saw blade clamped between the supporting ring and the at least one clamping element, a further circumferential recess for receiving the thrust element being provided in the clamping element opposite the recess in the supporting ring.

Further advantages, features and details of the invention can be gathered from the following specification, describing embodiments of the invention and referring to the drawing figures. The features recited in the claims and in the specification, respectively, can be essential for the invention either individually or in arbitrary combination.

The list of reference numerals and technical content of the claims is part of the disclosure. The drawing figures are described in correlation and jointly. Same reference numerals are used for same parts. Reference numerals with different indices are used for functionally identical or similar parts.

Fig. 1    shows a diagram of tension over radius of the saw blade for different tensioning forces,

Fig. 2    shows a radial cross section of a preferred embodiment of a thrust element according to the present invention,

Fig. 3    shows a representation of a segment of the support for the saw blade with the tensioning system according to a preferred embodiment of the present invention and

Fig. 4    shows a diagram of tension in the saw blade over the radius of the support of the saw blade.

Fig. 1 relates to an inner diameter saw with a prior art tensioning system for the saw blade, which latter consists of a thrust element acting perpendicularly on the saw blade for causing a radial tensioning force. The diagram shows the run of the curve of the radial tension in the saw blade as caused by a thrust element of known shape, i.e. having a central portion with a very small radius of about 6 mm over an angle of 60° to both sides of a surface perpendicular to the plane of the saw blade and following the bend of the thrust element.

This shape commonly used according to the state of the art results in a maximum tension by 400 mm in the diagram of Fig. 1, what corresponds to the maximum thickness of the tension ring. Where the saw blade leaves the thrust ring, reflexed trailing edges (S-stroke-profiles) can be seen. The solid line (holding) is when virtually no tension is applied to the thrust ring and it is only holding the saw blade. The dashed line (tensioning) shows when the saw blade is clamped and held firmly with about 2 mm widening for adjusting of the inner diameter of the saw blade and the dotted line (adjusting) shows the conditions with stronger tensioning and a widening of 2.7 mm.

The radial tension applied to the saw blade with a prior art tensioning system lies past the yield point causing plastifying of the material of the saw blade. With additional force leads to further radial tensioning, this can also damage and eventually rip the saw blade where the tensioning is highest, limiting the amount of additional tension that can be applied this way with known tensioning systems. The theoretic model does not show the peak in the area of pressure ring (400 mm in the example of Fig. 1). In real life the peak exists, because bending is applied to the saw blade.

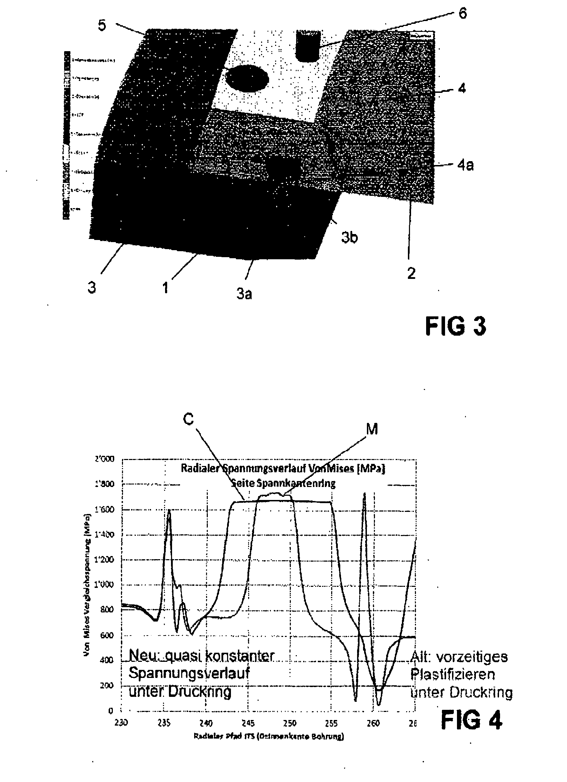

Fig. 2 is depicting a radial cross section of a thrust ring 1 as preferred example of a thrust element according to the present invention. The plane of the depicted cross section lies parallel to a radial direction of the saw blade and parallel to a line perpendicular to the plane of the thrust element 1. The surface 1 a of the side of the thrust element 1 facing the ingot saw blade 2 (see Fig. 3) has a convex center segment 1b, preferably an essentially circular center segment 1b with a radius R of at least 8 mm and up to 12 mm at maximum. The preferred radius values lie between 9 and 11 mm, even more preferred about 10 mm. This convex center segment 1b extends over at maximum an angle of about 35° on each sides from a surface P lying perpendicular to the saw blade 2 and extending radially from the centre of the thrust element 1. The preferred angles on both sides are about 30°, even more preferred angles by about 27°. In general, the convex curvature should be made as flat as possible, meaning to have the radius R of an essentially ciruclar center segment 1 b as great as possible. Thus, the peak - which is in the in the plastifying range - is made wider - as for instance when applying force with a blunt knife, so that the blade is not ripped as easily - as for instance when applying force with a sharp knife. Since however; the element has to have place in the complete arrangement, it cannot be made too wide, since extending it outwards would make the centrifugal forces too large to handle. Extending it inward, on the other hand, would reduce the size of the opening in the inner diameter saw

Adjacent to the outside of that center segment 1b further segments 1c are provided, said further segments 1 c being preferably also formed with convex curvatures, preferred with identical curvatures on both sides of the center segment 1 b. Said segments 1 c are preferred when shaped like a Bézier curve, even more preferred a Bézier curve with four control points 1d. Said form is preferred at least for the radially inner segment 1c. To guarantee a smooth transition of the segments 1 b, 1 c while omitting sharp edges or edges with local force and/or tension maxima, the tangents of the segments 1 b, 1 c in the transition point of the center segment 1 b to at least the radially inner adjacent segment 1 c will be made to coincide. For the embodiment with the Bézier curve adjacent to the center segment 1 b, the derivative of the Bézier curve equals that of the radius in the transition point from segment 1c to 1 b.

As is understood, the thrust element 1 could have concave segments adjacent to the convex segments 1c as well.

In the example of Fig. 2 the radius R is chosen to be 10 cm and the second radius r_2 is chosen to be 7 cm. For calculating the Bézier curve for the segments 1c of the thrust element 1 of Fig. 2 the starting values of the variables are as follows:

$$\delta_1 = \sin^{-1}\left(\frac{r_1 + r_2}{\sqrt{x_{sr}^2 + y_{sr}^2}}\right) - \tan^{-1}\left(\frac{y_{sr}}{x_{sr}}\right)$$

$$\delta_2 = \sin^{-1}\left(\frac{r_1 + r_2}{\sqrt{x_{sr}^2 + y_{sr}^2}}\right) - \tan^{-1}\left(\frac{y_{sr}}{x_{sr}}\right)$$

The calculations are performed with the following iteration formulae:

$$x_1 = r_1 \cdot \sin(\delta_1)$$

$$y_1 = r_1 \cdot \cos(\delta_1)$$

$$x_2 = x_{sr} - r_2 \cdot \sin(\delta_2)$$

$$y_2 = y_{sr} - r_2 \cdot \cos(\delta_2)$$

$$l = \sqrt{(x_2 - x_1)^2 + (y_2 - y_1)^2}$$

$$\varphi = \tan^{-1}\left(\frac{y_1 - y_2}{x_2 - x_1}\right)$$

$$\alpha_1 = \tan^{-1}\left(\frac{l}{3r_1}\right) - \tan^{-1}\left(\frac{l}{6r_2}\right)$$

$$\alpha_2 = \tan^{-1}\left(\frac{l}{3r_2}\right) - \tan^{-1}\left(\frac{l}{6r_1}\right)$$

$$\delta_1 = \varphi - \alpha_1$$

$$\delta_2 = \varphi - \alpha_2$$

After numerical calculation with the above formulae the following final results are achieved (units for non-angular values are centimeters):

$$x_1 = 4.540359670658038$$

$$y_1 = 8.90983355967224$$

$$x_2 = 8.82738676857139$$

$$y_2 = 6.47034285091313$$

$$l = 4.93251621957445$$

$$\varphi = 29.6416156529415°$$

$$\alpha_1 = 2.63869185867206°$$

$$\alpha_2 = 8.51849108004585°$$

$$\delta_1 = 27.0029237942695°$$

$$\delta_2 = 21.1231245728957°$$

$$e = \frac{l}{3} = 1.64417207319148$$

The above given numbers and values are only examples to show how a Bézier curve for a thrust element 1 according to the present invention could be designed. Said values and numbers can, as is understood, vary, in particular with varying diameter of the saw blade 2 and the thrust element 1.

In Fig. 3 a segment of the saw blade support ring 3 of an inner diameter saw with tensioning system according to the present invention is shown in greater detail. The ingot saw blade 2 is mounted on a supporting ring 3, clamped and held between said supporting ring 3 and a clamping ring 4 or a circumferential arrangement of clamping elements with similar functionality. The clamping ring 4 or any other clamping element is fastened to the supporting ring 3 by fastening elements, preferred fastening screws 5.

In the supporting ring 3a circumferential recess 3a is provided, defining a circular clamping edge with its radially inner edge 3b. On the opposite side of the recess 3a with regard to the saw blade 2, a further recess 4a is provided in the clamping ring 4, accommodating at least one thrust element 1, preferably in the form of a thrust ring running around the complete length of the circumferential recess 3a in the supporting ring 3 and designed as described above in connection with Fig. 2.

By means of at least one tensioning element, preferably an adjustable tensioning screw 6, for each thrust element 1 this latter can be adjustably biased onto the saw blade 2 and causes a force in a direction perpendicular to the saw blade 2, pressing it into the recess 3a of the supporting ring 3 and bending it over the inner edge 3b of said recess. Thereby, a tensioning force is applied to the saw blade 2. Since the fastening screws 5 firmly hold the saw blade on the outside, the saw blade 2 will be moved radially outward from the center of the saw blade 2 and lying within its plane, thus tensioning the inner edge. The forces exerted on the support ring 3 for mounting the saw blade 2 and the tensioning forces effected by means of the thrust element 1 (perpendicular to the plane of the saw blade 2) are acting counter-parallel. By way of example it is noted: The force of the fastening screws 5 can be 28.5kN per M8 12.9 to essentially tension the inner edge and not to pull in the outer edge.

For the preferred embodiment of the invention with one complete circumferential thrust ring as the only thrust element 1, there will be a series of circumferentially and preferably equidistantly spaced tensioning screws 6.

To prevent excessive bending and force peaks plastifying and possibly ripping the material of the saw blade 2, the inner edge 3b of the recess 3a in the supporting ring 3 is shaped correspondingly to the shape of the thrust element 1 over the radial range of the further segment 1c with changing bending sense, in particular over the radial range where the saw blade 2 leaves the thrust element 1. The sawing blade 2 touches the Bézier curve of the thrust element (1) and/or the radially inner edge 3b of the support ring 3 respectively, starting preferably with the control point 1 d nearest to the center segment 1b of the thrust element 1.

Although described above in connection with a clamping ring 4, the latter could be omitted and the saw blade 2 and the thrust elements 1 could also be mounted directly on the supporting ring 3, with e.g. its tensioning screws 6 also being connected to said supporting ring 3. In this embodiment of the invention, the forces exerted on the support ring 3 for mounting the saw blade 2 and the tensioning forces (perpendicular to the plane of the saw blade 2) are acting in parallel.

Fig. 4 shows a diagram of the radial course of the VonMises-tension over the radial path for thrust elements according to the present invention compared to one according to the state of the art. As the dashed line indicates, with thrust elements shaped as known from the state of the art, there is a sharp local tension maximum at M where the material of the saw blade 2 plastifies; it can easily be damaged and prevents additional build-up of radial forces in the saw blade 2 when applying higher pressing forces by means of the thrust element 1, because the blade will rip. With a thrust element 1 shaped according to the present invention, preferably supported in a supporting ring 3 with a recess 3a shaped as described above however, a tension progress as indicated by the solid line can be achieved, omitting sharp local tension maxima and assuring a constant tension level over a wide range of the radial path, thereby allowing higher tensioning forces, because the saw blade 2 is not ruptured easily.

The shape of the back side of the thrust element 1 is not that important and can be chosen deliberately, whatever form is deemed to be of advantage.

**List of reference numerals**

1        Thrust ring

1 a      Surface of thrust ring facing the saw blade

1 b      Center segment of thrust ring

1c       Further (outer) segments of thrust ring

1d       Control points of Bézier curve

2        Saw blade

3        Supporting ring

3a       Circumferential recess

3b       Inner edge of recess 3a

4        Clamping ring

4a      Further recess in clamping ring 4

5      Fastening screw

6      Tensioning screw

P      Surface perpendicular to saw blade and following bend of thrust element

M      Tension maximum

R      Radius of center segment

C      Constant tension level

**Claims**

1. Thrust element (1), preferably thrust ring, for a tensioning system for inner ingot diameter saws, said thrust element (1) intended to be biased onto the ingot saw blade (2) by at least one adjustable tensioning element (6), one edge of the radial cross section of the thrust element (1) facing the saw blade (2) having a convex shaped center segment (1 b) for being in contact with the saw blade (2),
**characterized in that** the center segment (1 b) is of essentially circular radial cross section with a radius (R) of 8 to 12 mm, preferably 9 to 11 mm, even more preferred about 10 mm.

2. Thrust element according to claim 1, **characterized In that** the center segment (1 b) extends over at maximum angles of about 35° each to both sides from a surface (P) perpendicular to the saw blade (2) and bent like the thrust element (1), the center segment (1b) preferably extending over an angle of about 30°, even more preferred over an angle of about 27°.

3. Thrust element according to claim 1 or 2, **characterized in that** at least radially on one side, preferably on both sides of the center segment (1b) a segment (1c) with convex radial cross section is following.

4. Thrust element according to claim 1 or 2 or 3, **characterized in that at** least one segment (1c), preferably the radially inner segment (1c), most preferably both adjacent segments (1c), is (are) shaped in form of a Bézier curve.

5. Thrust element according to claim 4, **characterized in that** at least one segment (1c), preferably the radially inner segment (1 c), most preferably both adjacent segments (1c), is shaped in form of a third order Bézier curve with four control points (1d).

6. Thrust element according to any of claims 3 to 5, **characterized in that** in the transition point of the center segment (1 b) to the adjacent segments (1c), the tangents of the segments (1 b, 1 c) coincide.

7. Inner diameter ingot saw with a supporting ring (3) and a tensioning system for an ingot saw blade (2), said tensioning system comprising at least a circumferential recess (3a) in the supporting ring, the radially inner edge (3b) of the recess (3a) defining a circular clamping edge, and further comprising at least one thrust element (1), preferably a thrust ring, with at least one adjustable tensioning element (6), preferably a tension screw, acting on the at least one thrust element (1), for adjustably biasing the thrust element (1) and the saw blade (2) into the circumferential recess (3a), **characterized by** a thrust element (1) according to any of claims 1 to 6.

8. Inner diameter saw according to claim 7, **characterized in that** at least the surface of the radially inner edge (3b) is, in the radial range where the saw blade (2) leaves the thrust element (1), of the same shape as the surface of the thrust element (1).

9. Inner diameter saw according to claim 7 or 8, **characterized in that** at least one clamping element (4), preferably a clamping ring, is mounted to the supporting ring (3) by fastening elements (5), preferably clamping screws, the outer part of the saw blade (2) clamped between the supporting ring (3) and the at least one clamping element (4), a further circumferential recess (4a) for receiving the thrust element (1) being provided in the clamping element (4) opposite the recess (3a) in the supporting ring (3).

10. Inner diameter saw according to one of the previous claims, wherein the thickness of the saw blade is compensated angular.

11. Inner diameter saw according to any feature combination described in the description and/or shown in the drawings

Radialer Spannungsverlauf zwischen 2 Spannschrauben,
Seite Spannkantenring

FIG 1 prior art

FIG 2

**FIG 3**

**FIG 4**

Europäisches
Patentamt

European
Patent Office

Office européen
des brevets

# EUROPEAN SEARCH REPORT

Application Number

EP 12 00 5839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 4 716 881 A (STEERE ROBERT E [US])<br>5 January 1988 (1988-01-05)<br>* column 1, lines 7-12 *<br>* column 2, line 61 - column 3, line 2 *<br>* column 3, lines 60-63 *<br>* figures * | 1,2,7-10<br><br>3,4 | INV.<br>B23D61/10 |
| Y | US 6 725 765 B1 (MENDENHALL GEORGE A [US])<br>27 April 2004 (2004-04-27)<br>* column 8, lines 13-24 *<br>* figures 3-6 * | 1,2,7-10 | |
| A | US 4 151 826 A (OTTE RUDOLF [US])<br>1 May 1979 (1979-05-01)<br>* column 6, line 41 - column 7, line 12 *<br>* column 1, lines 5-17 *<br>* figures 1,3-5 * | 1 | |
| A | EP 0 091 236 A2 (SILICON TECHNOLOGY [US])<br>12 October 1983 (1983-10-12)<br>* page 7, paragraph 4 - page 8, paragraph 2 *<br>* figures * | 1 | TECHNICAL FIELDS SEARCHED (IPC)<br><br>B23D |
| A,D | EP 0 464 668 A1 (WACKER CHEMITRONIC [DE])<br>8 January 1992 (1992-01-08)<br>* figures 2b, 3b * | 1 | |

The present search report has been drawn up for all claims

| Place of search | Date of completion of the search | Examiner |
|---|---|---|
| The Hague | 11 January 2013 | Chariot, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 12 00 5839

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2013

| Patent document cited in search report | | Publication date | Patent family member(s) | | Publication date |
|---|---|---|---|---|---|
| US 4716881 | A | 05-01-1988 | EP<br>US | 0262814 A2<br>4716881 A | 06-04-1988<br>05-01-1988 |
| US 6725765 | B1 | 27-04-2004 | NONE | | |
| US 4151826 | A | 01-05-1979 | NONE | | |
| EP 0091236 | A2 | 12-10-1983 | DE<br>EP<br>JP<br>JP<br>US | 3375722 D1<br>0091236 A2<br>5002467 B<br>58192758 A<br>4498449 A | 31-03-1988<br>12-10-1983<br>12-01-1993<br>10-11-1983<br>12-02-1985 |
| EP 0464668 | A1 | 08-01-1992 | DE<br>EP<br>JP<br>JP<br>US | 4020827 A1<br>0464668 A1<br>4304969 A<br>7083984 B<br>5235960 A | 02-01-1992<br>08-01-1992<br>28-10-1992<br>13-09-1995<br>17-08-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 464668 A1